# EUROPEAN PATENT SPECIFICATION

(11) **EP 3 814 543 B1**
(45) Date of publication and mention of the grant of the patent: **15.05.2024**
(21) Application number: 19740233.2
(22) Date of filing: 27.06.2019
(51) Int. Cl.: C22C 9/00, C22C 9/06, C23C 30/00, B23K 11/00, B23K 35/02, B23K 26/00, B23K 26/34, B23K 35/30, C23C 24/10

(54) **COPPER-BASED HARDFACING ALLOY**
AUFSCHWEISSLEGIERUNG AUF KUPFERBASIS
ALLIAGE DE RECHARGEMENT À BASE DE CUIVRE

(30) Priority: 29.06.2018 US 201862692576 P
(43) Date of publication of application: 05.05.2021
(73) Proprietor: Oerlikon Metco (US) Inc., Westbury NY 11590 (US)
(72) Inventor: BRACCI, Jonathon, Westbury, New York 11590 (US); EIBL, Cameron, Westbury, New York 11590 (US); CHENEY, Justin, Lee, Westbury, New York 11590 (US); ZIKIN, Arkadi, Westbury, New York 11590 (US); SPATZIER, Jorg, Westbury, New York 11590 (US)
(74) Representative: Aera A/S
(86) International application number: PCT/US2019/039463
(87) International publication number: WO 2020/006205

(56) References cited:
- EP-A1- 1 279 748
- EP-A1- 1 279 748
- EP-A1- 1 279 748
- EP-A1- 1 279 749
- EP-A1- 1 279 749
- EP-A1- 1 279 749
- KR-A- 20020 019 296
- KR-A- 20020 019 296
- US-A- 4 818 307
- US-A- 4 818 307
- US-A- 4 818 307
- US-A1- 2017 253 950
- US-A1- 2017 253 950

## Description

### INCORPORATION BY REFERENCE TO ANY PRIORITY APPLICATIONS

This application claims from the benefit of U.S. App. No. 62/692,576, filed June 29, 2018, and entitled "COPPER-BASED HARDFACING ALLOY".

### BACKGROUND

### Field

Embodiments of the disclosure generally relate to copper-based alloys with silicides free or substantially free of Co, Mn, Mo, Ta, V, and/or W.

### Description of the Related Art

There currently exists copper-based hardfacing materials designed to be abrasion and crack resistant. These alloys typically form complex silicide phases within a copper matrix. Copper-based alloys provide excellent thermal conductivity, corrosion resistance, high temperature properties, and have been found to be most suitable for cladding onto aluminum-based substrates. The addition of hard silicide phases into copper alloys have been utilized as a means of increasing the alloy's wear resistance, and typically are based around the formation of silicides containing any combination of Co, Mn, Mo, Ta, V, and/or W.
EP1279748A1 describes aluminum bronze containing 7.5-10 weight % aluminum, 5-14 weight % manganese, 1.5-4 weight % silicon and a balance of copper and the usual impurities of up to 1 weight %. Preferred Features: The aluminum bronze contains 5-9 weight % iron. The aluminum bronze preferably contains 8-9 weight % aluminum, 12-13 weight % manganese, 3-4 weight % silicon and a balance of copper and the usual impurities of up to 1 weight %. The aluminum bronze further contains up to 0.5 weight % lead.
EP1279749A1 describes aluminum bronze containing 7.5-9.5 weight % aluminum, 7-9.5 weight % iron, 7-11 weight % nickel, 1.5-4 weight % silicon and a balance of copper and the usual impurities of up to 1 weight %. Preferred Features: The aluminum bronze contains 8-9 weight % aluminum, 8-9 weight % iron, 7-10 weight % nickel, 3-4 weight % silicon and a balance of copper and the usual impurities of up to 1 weight %. The aluminum bronze further contains up to 0.5 weight % lead.
US 4818307 describes a dispersion strengthened copper-base alloy having an excellent wear resistance, which alloy contains 5 to 30% (in weight) of nickel, 1 to 5% of silicon, 0.5 to 3% of boron and 4 to 30% of iron, the remainder being copper and unavoidable impurities, and having a structure in which hard particles composed chiefly of a silicide of iron-nickel system are dispersed in a copper-base matrix. The copper-base alloy is suitably cladded (or deposited) locally on a metallic base. The alloy may contain at least one of 0.1 to 5% of aluminum, 0.1 to 5% of Ti and 1 to 10% of Mn, if necessary, in addition to the above specified components. If necessary, 0.02 to 2% of carbon and 0.5 to 10% of chromium and/or 0.3 to 5% of titanium may be further added. Then, the structure is modified such that both the particles composed chiefly of the iron-nickel silicide and carbide particles are coexistently dispersed in the copper-base matrix.
KR 20020019296A describes a sintered alloy for a valve seat manufactured by laser cladding which improves abrasion resistance and corrosion resistance at a high temperature and bonding property with an engine block by manufacturing a valve seat the surface of which is alloyed. CONSTITUTION: The abrasion resistant sintered alloy for a valve seat comprises a main constituent of copper, 0.2 to 1.5 wt.% of carbon, 1.0 to 5.0 wt.% of silicon, 5.0 to 10.0 wt.% of nickel, 1.0 to 15.0 wt.% of chromium and 2.0 to 10.0 wt.% of iron. The method for manufacturing the abrasion resistant sintered alloy for a valve seat comprises the processes of manufacturing a mixed metal powder by containing a main constituent of copper, 0.2 to 1.5 wt.% of carbon, 1.0 to 5.0 wt.% of silicon, 5.0 to 10.0 wt.% of nickel, 1.0 to 15.0 wt.% of chromium and 2.0 to 10.0 wt.% of iron; and cladding the metal powder by injecting the mixed metal powder into a matrix of a cylinder head which is fused by scanning of electron beams.
US 2017253950 A1 describes a copper-base alloy with excellent wear resistance. The wear-resistant copper-base alloy includes, by mass %: 5.0 to 30.0% nickel; 0.5 to 5.0% silicon; 3.0 to 20.0% iron; less than 1.0% chromium; less than or equal to 5.0% niobium; less than or equal to 2.5% carbon; 3.0 to 20.0% of at least one element selected from the group consisting of molybdenum, tungsten, and vanadium; 0.5 to 5.0% manganese and/or 0.5 to 5.0% tin; balance copper; and inevitable impurities, and has a matrix and hard particles dispersed in the matrix, when niobium is contained, the hard particles contain niobium carbide and at least one compound selected from the group consisting of Nb-C-Mo, Nb-C-W, and Nb-C-V around the niobium carbide, and when niobium is not contained, the hard particles contain at least one compound selected from the group consisting of molybdenum carbide, tungsten carbide, and vanadium carbide.

### SUMMARY

The invention relates to the welding feedstock of claim 1. All embodiments marked as "for understanding and context of the disclosure" do not belong to the invention.

In some embodiments, the welding feedstock can be substantially free of nickel. In some embodiments, the welding feedstock can be a powder. In some embodiments, the welding feedstock can be configured to be applied as a layer via a laser.

In some embodiments, the feedstock can be characterized by having a total hard phase fraction of silicides, carbides and borides at 1100K of at least 10 mole% according to the claims. In some embodiments, the feedstock can be characterized by having a total hard phase fraction of silicides, carbides and borides at 1100K of at least 15 mole% according to the claims. In some embodiments, the feedstock can be characterized by having a total hard phase fraction of silicides, carbides and borides at 1100K of at least 20 mole% according to the claims.

Also disclosed herein are embodiments of a hardfacing layer formed from the welding feedstock according to the claims.

In some embodiments, the hardfacing layer can comprise a Cu-based matrix comprising at least 85 wt. % Cu. In some embodiments, the hardfacing layer can comprise a Cu-based matrix comprising at least 90 wt. % Cu. In some embodiments, the hardfacing layer can comprise a Cu-based matrix comprising at least 95 wt. % Cu.

In some embodiments, the hardfacing layer can comprise a total volume fraction of silicides, carbides and borides of at least 10 volume%, wherein the hardness of the silicide phase is equal to or less than 1200 HV, and wherein the hardfacing layer contains a total of2 wt.% or less of Co, Mn, Mo, Ta, V, and W. In some embodiments, the hardfacing layer can comprise a total volume fraction of silicides, carbides and borides of at least 15 volume%, wherein the hardness of the silicide phase is equal to or less than 1000 HV, and wherein the hardfacing layer contains a total of2 wt.% or less of Co, Mn, Mo, Ta, V, and W. In some embodiments, the hardfacing layer can comprise a total volume fraction of silicides, carbides and borides of at least 20 volume%, wherein the hardness of the silicide phase is equal to or less than 800 HV, and wherein the hardfacing layer contains a total of2 wt.% or less of Co, Mn, Mo, Ta, V, and W.

In some embodiments, the hardfacing layer can comprise an ASTM G77 volume loss of at most 1.0 mm³, 2 cracks or fewer per square inch when forming a hardfacing layer, and wherein the hardfacing layer contains a total of2 wt.% or less of Co, Mn, Mo, Ta, V and W. In some embodiments, the hardfacing layer can comprise an ASTM G77 volume loss of at most 0.9 mm³, 1 cracks or fewer per square inch when forming a hardfacing layer, and wherein the hardfacing layer contains a total of2 wt.% or less of Co, Mn, Mo, Ta, V and W. In some embodiments, the hardfacing layer can comprise an ASTM G77 volume loss of at most 0.8 mm³, 0 cracks or fewer per square inch when forming a hardfacing layer, and wherein the hardfacing layer contains a total of2 wt.% or less of Co, Mn, Mo, Ta, V and W.

A method of applying a hardfacing layer, the method comprising laser welding the welding feedstock according to any of the claims, wherein the welding feedstock is a powder.

In some embodiments for understanding and context of this disclosure, an article of manufacture can comprise an alloy forming or configured to form a material comprising a Cu-based matrix comprising at least 85 weight% Cu and a total hard phase fraction of silicides, carbides and borides at 1100K of at least 10 mole%, wherein the alloy is configured to form two immiscible liquid phases during solidification and forms a microstructure containing hard phases within the Cu-based matrix, wherein a silicide phase formation temperature of the alloy is between 1000K and 1600K, and wherein the alloy contains a total of 2 wt.% or less of Co, Mn, Mo, Ta, V, and W.

In some embodiments for understanding and context of this disclosure, the article of manufacture can comprise an alloy forming or configured to form a material comprising a Cu-based matrix comprising at least 90 weight% Cu and a total hard phase fraction of silicides, carbides and borides at 1100K of at least 15 mole%, wherein a silicide phase formation temperature of the alloy is between 1000K and 1400K. In some embodiments, the article of manufacture can comprise an alloy forming or configured to form a material comprising a Cu-based matrix comprising at least 95 weight% Cu and a total hard phase fraction of silicides, carbides and borides at 1100K of at least 20 mole%, wherein the silicide phase formation temperature of the alloy is between 1000K and 1300K.

In some embodiments for understanding and context of this disclosure, the alloy of the article of manufacture forms or is configured to form a material comprising Cu and in weight percent: C: 0.1 to 1.0; Cr: 5 to 20; Fe: 1 to 15; Nb: 0 to 5; Ni: 5 to 20; Si: 2 to 5; and Ti: 0 to 5.

In some embodiments for understanding and context of this disclosure, the alloy of the article of manufacture is in the form of a feedstock comprising Cu and in weight%: C: 0.1, Cr: 6.5, Fe: 9, Nb: 1, Ni: 17, Si: 3; C: 0.1, Cr: 7, Fe: 9, Nb: 1, Ni: 5, Si: 4; C: 0.6, Cr: 5, Fe: 5, Nb: 5, Ni: 5, Si: 4; C: 0.1 Fe: 18, Nb: 1. Ni:7, Si:6; or C: 0.1 Fe: 14, Nb: 1. Ni: 13, Si:6.

Also disclosed herein are embodiments of a hardfacing layer formed from the article of manufacture. In some embodiments, the article is applied onto a cylinder head for an internal combustion engine to form the hardfacing layer.

In some embodiments for understanding and context of this disclosure, the alloy of the article of manufacture is in the form of a powder. In some embodiments for understanding and context of this disclosure, the alloy of the article of manufacture is in the form of a metal cored wire.

Also disclosed herein are embodiments for understanding and context of this disclosure of an article of manufacture comprising an alloy forming or configured to form a material comprising a Cu-based matrix comprising at least 85 weight% Cu and a total volume fraction of silicides, carbides and borides of at least 10 volume%, wherein the hardness of the silicide phase is equal to or less than 1200 HV, and wherein the alloy contains a total of 2 wt.% or less of Co, Mn, Mo, Ta, V, and W.

In some embodiments for understanding and context of this disclosure, the article of manufacture can comprise an alloy forming or configured to form a material comprising a Cu-based matrix comprising at least 90 weight% Cu and a total hard phase fraction of silicides, carbides and borides of at least 15 volume% comprising a silicide phase and a carbide phase, wherein the hardness of the silicide phase is equal to or less than 1000 HV. In some embodiments, the article of manufacture can comprise an alloy forming or configured to form a material comprising a Cu-based matrix comprising at least 95 weight% Cu and a total hard phase fraction of silicides, carbides and borides of at least 20 volume%, wherein the hardness of the silicide phase is equal to or less than 800 HV.

Also disclosed herein are embodiments for understanding and context of this disclosure of an article of manufacture comprising an alloy forming or configured to form a material having an ASTM G77 volume loss of at most 1.0 mm³, 2 cracks or fewer per square inch when forming a hardfacing layer, and wherein the alloy contains a total of 2 wt.% or less of Co, Mn, Mo, Ta, V and W.

In some embodiments for understanding and context of this disclosure, the article of manufacture can comprise an alloy forming or configured to form a material comprising an ASTM G77 volume loss of 0.9 mm³ or less and 1 crack or fewer per square inch when forming a hardfacing layer. In some embodiments, the article of manufacture can comprise an alloy forming or configured to forma a material comprising an ASTM G77 volume loss of 0.8 mm³ or less and 0 cracks per square inch when forming a hardfacing layer.

Also disclosed herein for understanding and context of this disclosure are methods of laser welding comprising cladding an aluminum substrate using a metal cored copper-based wire.

In some embodiments for understanding and context of this disclosure, the method can comprise wherein a short wavelength laser of blue or green light is utilized. In some embodiments, the method can comprise wherein automotive components are clad. In some embodiments, the method can comprise wherein engine block valves or cylinder heads are clad.

In some embodiments for understanding and context of this disclosure, the method can comprise wherein the wire comprises Cu and in weight % C: 0.1 to 1.0, Cr: 0 to 20, Fe: 1 to 25, Nb: 0 to 5, Ni: 5 to 25, Si: 2 to 5, and Ti: 0 to 5.

### BRIEF DESCRIPTION OF THE DRAWINGS

**Figure 1** illustrates a phase diagram of an embodiment of the disclosure of alloy X14 showing the total mole fraction of hard phases present at 1100K and the maximum phase mole fraction of the second liquid phase.
**Figure 2** illustrates a phase diagram of an embodiment of the disclosure of alloy X17 showing the formation temperature of the first silicide phase to form.
**Figure 3** shows an SEM image of an embodiment of the disclosure of alloy X14 with silicide particles and an FCC matrix phase.

### DETAILED DESCRIPTION

Embodiments of the present disclosure include, but are not limited to, hardfacing/hardbanding materials, alloys, or powder compositions used to make such hardfacing/hardbanding materials, methods of forming the hardfacing/hardbanding materials, and the components or substrates incorporating or protected by these hardfacing/hardbanding materials.

In some embodiments, copper-based alloys as described herein may serve as effective feedstock for the plasma transferred arc (PTA) and laser cladding hardfacing processes. Some embodiments include the manufacture of copper-based alloys into cored wires for hardfacing processes, and the welding methods of copper-based wires and powders using wire fed laser and short wave lasers. In some embodiments, the alloys disclosed herein can be powders. In some embodiments, they may be welding material, such as, for example, applied by a laser.

In certain applications it is desirable to form a crack free clad metal layer with high thermal conductivity and high abrasion resistance. Copper alloys have high thermal conductivity and are thus a good choice for applications requiring a high thermally conductive cladding. In addition, copper alloys form a face centered cubic (FCC) crystal structure which possesses good toughness and crack resistant properties. The design of hard phases such as silicides, aluminides, borides or carbides into the FCC copper matrix can be used to increase the abrasion resistance of the alloy. However, the formation of hard phases in the alloy will affect crack susceptibility and machinability. Therefore, the design of the hard phases is critical for producing a microstructure that is both abrasion resistance while maintaining a high degree of toughness and resistance to cracking.

Disclosed herein are copper alloys that have been developed with specific hard phase/phases that form in the alloy in order to provide an optimal balance of toughness, abrasion resistance, machinability, and alloy cost. By utilizing silicides free or substantially free of expensive elements such as Co, Mn, Mo, Ta, V, and/or W, the alloy's cost can be kept at a minimum. In addition, the hardness of these types of silicides containing Co, Mn, Mo, Ta, V, and/or W is relatively high, > 900 HV. Furthermore, eliminating Co, Mn, Mo, Ta, V, and W from the alloy reduces the hardness of the silicide phase which improves the alloy's crack resistance and machinability.

Alloys which do not utilize Co are also desirable from an environmental health perspective. Co-bearing alloys produce harmful fumes during the welding process. Alloys which do not utilize Mo, Ta, V, and W are advantageous from a manufacturing cost perspective. Alloys which do not utilize Mn are advantageous from a manufacturing and processability perspective as Mn readily oxidizes, which increases manufacturing and welding process complexity. In the complex alloy space, it is not possible to simply remove an element or substitute one for the other and yield equivalent results.

In some embodiments, computational metallurgy is used to identify alloys which form two immiscible liquid phases during solidification to form a microstructure containing hard silicide phases in a FCC copper matrix. During solidification, one immiscible liquid phase rich in copper solidifies into the copper FCC matrix phase. The second immiscible liquid phase rich in all the other alloying elements solidifies to form the isolated hard silicide phase particles contained within the copper FCC matrix.

In some embodiments, alloys manufactured into a solid or cored wire (a sheath containing a powder) for welding or for use as a feedstock for another process may be described by specific chemistries herein. For example, the wires can be used for a thermal spray. In some embodiments for understanding and context of this disclosure, the compositions can be from a single wire or a combination of multiple wires (such as 2, 3, 4, or 5 wires).

### Metal Alloy Composition

In some embodiments, alloys can be fully characterized by their compositional ranges. In some embodiments, alloys can be characterized by their thermodynamic criteria. In some embodiments, the alloys can be free or substantially free of Co, Mn, Mo, Ta, V, and/or W. In some embodiments, for understanding and context of this disclosure the term "substantially free" may be understood to mean 2 wt.% (or 2 wt.%) or less, 1 wt.% (or 1 wt.%) or less, 0.5 wt.% (or 0.5 wt.%) or less, 0.1 wt.% (or 0.1 wt.%) or less, or 0.01 wt.% (or 0.01 wt.%) or less of a specified element, or any range between any of these values. In some embodiments, alloys substantially free of Co, Mn, Mo, Ta, V, and W refers to there being 2 wt.% (or 2 wt.%) or less, 1 wt.% (or 1 wt.%) or less, 0.5 wt.% (or 0.5 wt.%) or less, 0.1 wt.% (or 0.1 wt.%) or less, or 0.01 wt.% (or 0.01 wt.%) or less of all of those elements combined.

In some embodiments for understanding and context of this disclosure, the composition can comprise in weight percent the following elemental ranges:
Cu: balance;
B: 0 to 2;
C: 0 to 1.0;
Cr: 0 to 12;
Fe: 1 to 25;
Nb: 0 to 5;
Ni: 5 to 25;
Si: 2 to 11; and
Ti: 0 to 1.

In some embodiments for understanding and context of this disclosure, the composition can comprise in weight percent the following elemental ranges:
Cu: Balance;
Cr: 5 to 12;
Fe: 5 to 9;
Ni: 5 to 17;
Si: 3 to 4; and
Ti: 0 to 1.

In some embodiments for understanding and context of this disclosure, the composition can comprise in weight percent the following elemental ranges:
Cu: Balance;
C: 0.1 to 1.0;
Cr: 5 to 20;
Fe: 1 to 15;
Nb: 0 to 5;
Ni: 5 to 20;
Si: 2 to 5; and
Ti: 0 to 5.

In some embodiments for understanding and context of this disclosure, the composition can be free or substantially free of chromium. In some embodiments, the composition can comprise in weight percent the following elemental ranges:
Cu: Balance;
Fe: 15 to 25;
Ni: 5 to 20; and
Si: 4 to 8.

In some embodiments, the composition can be free or substantially free of nickel. In some embodiments for understanding and context of this disclosure, the composition can comprise in weight percent the following elemental ranges:
Cu: Balance;
Fe: 15 to 25; and
Si: 4 to 8.

Table I lists a number of experimental alloys, with their compositions listed in weight percent and the balance Cu, produced in the form of small scale ingots. It may be appreciated that appreciated that P92-X20, P92-X21, P92-X23, P92-X24, and P92-X26 are comparative examples for understanding and context of this disclosure.

**Table I: List of Nominal Experimental Alloy Compositions, Balance Copper + Minor Impurities**

| **Alloy** | **B** | **C** | **Cr** | **Fe** | **Nb** | **Ni** | **Si** |
|---|---|---|---|---|---|---|---|
| P92-X14 | | 0.1 | 6.5 | 9 | 1 | 17 | 3 |
| P92-X16 | | 0.1 | 7 | 9 | 1 | 10 | 4 |
| P92-X17 | | 0.1 | 7 | 9 | 1 | 5 | 4 |
| P92-X18 | | 0.1 | 12 | 9 | 1 | 14 | 4 |
| P92-X19 | | 0.1 | 12 | 9 | | 14 | 4 |
| P92-X20 | | 0.2 | 5 | 5 | 3 | 10 | 4 |
| P92-X21 | | 0.6 | 5 | 5 | 5 | 5 | 4 |
| P92-X23 | | 0.1 | | 12 | 1 | 11 | 11 |
| P92-X24 | | 0.1 | | | 1 | 24 | 4 |
| P92-X25 | | 0.1 | | 18 | 1 | 7 | 6 |
| P92-X26 | | 0.1 | | 21 | 1 | | 6 |
| P92-X27 | 2 | 0.1 | | 14 | 1 | 14 | 3 |
| P92-X28 | 1 | | | 16 | | 14 | 4 |
| P92-X29 | | 0.1 | | 14 | 1 | 13 | 6 |

In some embodiments for understanding and context of this disclosure, the composition can comprise Nb and C. In some embodiments, Nb and C may encourage a fine scale microstructure. In some embodiments for understanding and context of this disclosure, the composition can further comprise in weight percent the following elemental ranges:
Nb: 0.1 - 5; and
C: 0.01 - 0.6.

In some embodiments for understanding and context of this disclosure, the composition can further comprise in weight percent the following elemental ranges:
Nb: 0.1-2; and
C: 0.01 - 0.2.

In some embodiments for understanding and context of this disclosure, the composition can comprise a minimum copper content. In some embodiments, the composition can comprise copper in at least 55 wt.%, at least 60 wt.%, at least 65 wt.%, at least 68 wt.%, at least 70 wt.%, at least 75 wt.% or at least 80 wt.% (or at least 55 wt.%, at least 60 wt.%, at least 65 wt.%, at least 68 wt.%, at least 70 wt.%, at least 75 wt.% or at least 80 wt.%) or any range between any of these values.

In some embodiments, the composition can comprise boron. In some embodiments, boron is used as an alloying addition. In some embodiments, the composition can have up to 2 wt.% (or 2 wt.%) boron. In some embodiments, the composition can have 1 wt. % (or 1 wt. %) boron. In some embodiments, the composition can be boron free.

In some embodiments, the disclosed compositions can be the wire/powder, the coating or other metallic component, or both.

The disclosed alloys incorporate the above elemental constituents to a total of 100 wt. %. In some embodiments for understanding and context of this disclosure, the alloy include, be limited to, or consist of the above named elements. In some embodiments for understanding and context of this disclosure, the alloy may include 2 wt.% (or 2 wt.%) or less, 1 wt.% (or 1 wt.%) or less, 0.5 wt.% (or 0.5 wt.%) or less, 0.1 wt.% (or 0.1 wt.%) or less or 0.01 wt.% (or 0.01 wt.%) or less of impurities, or any range between any of these values. Impurities may be understood as elements or compositions that may be included in the alloys due to inclusion in the feedstock components, through introduction in the manufacturing process. In some embodiments, an impurity may be Co, Mn, Mo, Ta, V, and/or W.

Further, the Cu content identified in all of the compositions described in the above paragraphs is the balance of the composition as indicated above.

### Thermodynamic Criteria

In some embodiments, alloys can be characterized by their equilibrium thermodynamic criteria. In some embodiments, the alloys can be characterized as meeting some of the described thermodynamic criteria. In some embodiments, the alloys can be characterized as meeting all of the described thermodynamic criteria.

A first thermodynamic criterion pertains to the matrix chemistry of the alloy, and may be used to quantify the alloy's thermal conductivity. This criterion characterizes the copper composition in the FCC copper rich matrix phase at 1200K. In some embodiments, the higher the copper content is in the matrix phase the higher the alloy's thermal conductivity will be.

In some embodiments, the copper content in the FCC matrix at 1200K is at least 60 weight %, at least 70 weight %, at least 75 weight %, at least 80 weight %, at least 85 weight %, at least 90 weight %, at least 95 weight % or at least 98 weight %, (or at least 60 weight %, at least 70 weight %, at least 75 weight %, at least 80 weight %, at least 85 weight %, at least 90 weight %, at least 95 weight % or at least 98 weight %) or any range between any of these values. The copper content in the FCC matrix may not closely relate to the copper content in the alloy's bulk composition. In some embodiments, the matrix may contain from 30-50% (or 30-50%) more copper at 1200K as compared to the copper in the alloy composition.

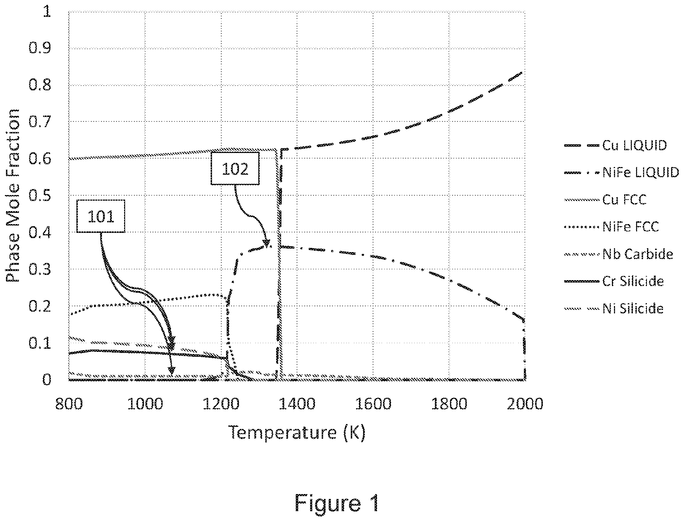

A second thermodynamic criterion pertains to the alloy's abrasion resistance, and the second thermodynamic criterion is defined as the total mole fraction of hard phases present at 1100K, shown at **101** in **Figure 1**. In some embodiments, the total mole fraction of hard phases can comprise silicides, carbides and/or borides. In some embodiments, controlling the phase fraction of hard silicides can be an important design aspect of alloys, as optimal phase fraction of silicide may aid in obtaining an alloy with an optimal balance of wear resistance, crack resistance and machinability.

In some embodiments, the total hard phase fraction at 1100K is at least 5 mole%, at least 10 mole%, at least 15 mole%, at least 20 mole%, at least 25 mole% or at least 30 mole%, (or at least 5 mole%, at least 10 mole%, at least 15 mole%, at least 20 mole%, at least 25 mole% or at least 30 mole%) or any range between any of these values.

A third thermodynamic criterion pertains to the alloy's crack resistance, and the third thermodynamic criterion is defined as the maximum phase mole fraction of the second liquid phase, shown at **102** in **Figure 1**. During a welding process, the alloy may separate into two liquids. One liquid can form a ductile copper phase. The other liquid can form a hard but brittle phase, likely due to the presence of silicides and/or borides. Thus, the higher phase fraction of the second liquid phase will result in a more brittle phase with an increased tendency to crack.

In some embodiments, this third criterion can be used in conjunction with the second thermodynamic criterion (i.e. total hard phase at 1100K) to predict abrasion resistance and/or hard phase morphology. It was determined that reducing the maximum mole fraction of the second liquid phase produces silicide precipitates that are finer and more evenly dispersed throughout the microstructure. In some embodiment, controlling the hard phase morphology and mole fraction can be an important design aspect for producing a microstructure that is both crack resistant and abrasion resistant.

In some embodiments, the maximum second liquid phase fraction is at most 55 mole%, at most 50 mole%, at most 45 mole%, at most 35 mole%, at most 25 mole%, at most 20 mole%, at most 15 mole% or at most 10 mole% (or at most 55 mole%, at most 50 mole%, at most 45 mole%, at most 35 mole%, at most 25 mole%, at most 20 mole%, at most 15 mole% or at most 10 mole%), or any range between any of these values.

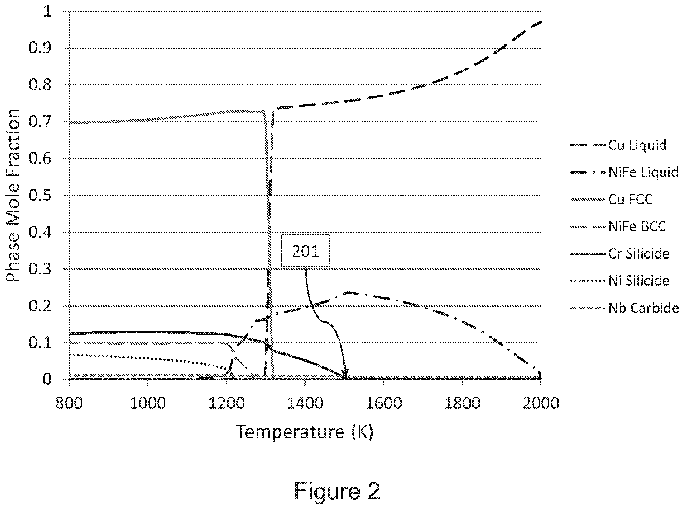

A fourth thermodynamic criterion pertains to the hardness of the silicide precipitates. This criterion characterizes the formation temperature of the first silicide phase to form, shown at **201** in **Figure 2****.** It was determined that as the formation temperature of the silicide phase increases, the silicides become more enriched in the silicide forming elements and form a harder silicide. In some embodiments, controlling the hardness of the silicide phase can be an important design aspect of alloys, as the hardness of the silicide phase affects the wear resistance, crack resistance and machinability of the alloy. In some embodiments, an alloy comprising silicide with a high level of hardness may result in adequate wear resistance, but poor crack resistance and machinability. In some embodiments, an alloy comprising silicide with a low level of hardness may result in poor wear resistance, but adequate crack resistance and machinability.

In some embodiments, the silicide formation temperature is between 900K and 1700K, between 1000K and 1600K, between 1000K and 1400K, between 1000K and 1300K, between 1100K and 1500K or between 1200K and 1400K (or between 900K and 1700K, between 1000K and 1600K, between 1000K and 1400K, between 1000K and 1300K, between 1100K and 1500K or between 1200K and 1400K), or any range between any of these values.

Table II lists a number of the experimental alloys within the four thermodynamic criteria, and displays the alloys' calculated thermodynamic results.

**Table II: List of Calculated Thermodynamic Criteria for Experimental Alloys, *may include boride formation temperature, whichever forms first.**

| **Alloy** | **Cu in Matrix at 1200K (weight%)** | **Total Hard at 1100K (mole%)** | **Max Second Liquid (mole%)** | **Silicide Formation Temp. (K)** |
|---|---|---|---|---|
| P92-X14 | 93.9 | 16.3 | 36.2 | 1285 |
| P92-X16 | 95.5 | 22.4 | 30.4 | 1430 |
| P92-X17 | 95.8 | 18.6 | 23.6 | 1505 |
| P92-X18 | 94.2 | 25.6 | 40.9 | 1455 |
| P92-X19 | 94.3 | 22.9 | 42.1 | 1460 |
| P92-X20 | 95.8 | 19.8 | 22.5 | 1470 |
| P92-X21 | 96.0 | 21.9 | 14.4 | 1540 |
| P92-X23 | 95.4 | 39.3 | 33.2 | 1400 |
| P92-X24 | 94.2 | 30.2 | 26.3 | 1400 |
| P92-X25 | 95.9 | 9.7 | 31.7 | 1300 |
| P92-X26 | 96.6 | 7.9 | 26.8 | 1250 |
| P92-X27 | 95.5 | 41 | 41.4 | 1550* |
| P92-X28 | 95.8 | 32.7 | 39.5 | 1300* |

### Microstructural Criteria

In some embodiments, alloys can be described by their microstructural criterion. In some embodiments, the alloys can be characterized as meeting some of the described microstructural criteria. In some embodiments, the alloys can be characterized as meeting all of the described microstructural criteria.

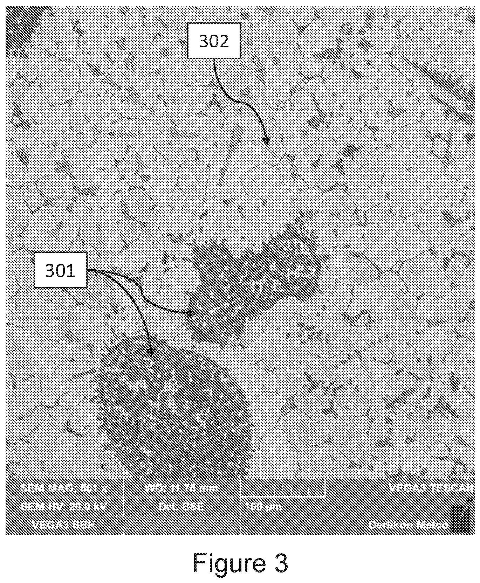

A first microstructural criterion pertains to the total measured volume fraction of hard particles and/or hard phases. In some embodiments, this first microstructural criterion pertains to the total measured volume of hard particles and/or hard phases that are silicides. **Figure 3** shows silicide particles **301** according to one embodiment. In some embodiments, the total measured volume fraction of hard particles and/or hard phases can comprise silicides, carbides and/or borides.

In some embodiments, the total measured volume fraction of hard particles and/or hard phases is at least 5 volume%, at least 8 volume%, at least 10 volume%, at least 15 volume%, at least 20 volume%, at least 25 volume% or at least 30 volume% (or at least 5 volume%, at least 8 volume%, at least 10 volume%, at least 15 volume%, at least 20 volume%, at least 25 volume% or at least 30 volume%), or any range between any of these values.

In some embodiments, chromium silicides form as the hard phase. In some embodiments, nickel silicides form as the hard phase. In some embodiments, iron silicides form as the hard phase. In some embodiments, nickel borides form as the hard phase. In some embodiments, iron borides form as the hard phase. In some embodiments, the hard phase may be a combination of two or more of chromium silicides, nickel silicides, iron silicides, nickel borides, and iron borides. In some embodiments, the hard phase may be a combination of two or more of nickel silicides, iron silicides, nickel borides, and iron borides.

A second microstructural criterion pertains to the thermal conductivity of the alloy. Copper is amongst one of the highest thermally conductive metals. Therefore, in some embodiments, maximizing the copper balance in the FCC matrix phase of the alloy may be advantageous for maximizing thermal conductivity. **Figure 3** shows the FCC matrix phase **302.** Energy dispersive spectroscopy (EDS) is used to measure the weight% copper content in the alloy's matrix phase.

In some embodiments, the total copper content in the matrix is at least 70 weight%, at least 75 weight%, at least 80 weight%, at least 85 weight%, at least 90 weight%, at least 95 weight% or at least 97 weight% (or at least 70 weight%, at least 75 weight%, at least 80 weight%, at least 85 weight%, at least 90 weight%, at least 95 weight% or at least 97 weight%), or any range between any of these values.

In some embodiments, the total copper in the alloy as a whole (e.g., not just the matrix) is maximized to increase the thermal conductivity of the alloy. In some embodiments, the minimum copper content is at least 55 wt. %, at least 60 wt. %, at least 65 wt. %, at least 68 wt. %, at least 70 wt. %, at least 75 wt. % or at least 80 wt. % (or at least 55 wt. %, at least 60 wt. %, at least 65 wt. %, at least 68 wt. %, at least 70 wt. %, at least 75 wt. % or at least 80 wt. %), or any range between any of these values.

A third microstructural criterion pertains the hardness of the silicide phase. In some embodiments, controlling the hardness of the silicide can be an important design aspect for creating an optimized balance of wear resistance, crack resistance and machinability. The hardness of the silicide can increase with the formation temperature of the silicide. In some embodiments, silicide phases that are too hard may result in the alloy having greater crack susceptibility and poor machinability. Hardness of the silicide phases is measured using Vickers microhardness with a 50 grams force load.

In some embodiments, the hardness of the silicide is at most 1600 HV, at most 1400 HV, at most 1200 HV, at most 800 HV, at most 400 HV, at most 300 HV or at most 250 HV (at most 1600 HV, at most 1400 HV, at most 1200 HV, at most 800 HV, at most 400 HV, at most 300 HV or at most 250 HV), or any range between any of these values. In some embodiments, the hardness of the silicide is 150 HV (or 150 HV) or greater.

A fourth microstructural criterion pertains to the microstructure of precipitated hard phases. In some embodiments, morphology, size and distribution of precipitated hard phases may have a significant influence on thermo-physical and mechanical properties. In some embodiments, the fine grained precipitation of hard phases and their homogeneously distribution may be characteristic of laser-processed materials due to rapid undercooling. Thus, it can be advantageous to have silicide phases that are generally smaller in size.

In some embodiments, all silicides in the alloy can have a diameter of 200 microns (or 200 microns) or less. In some embodiments, all silicides in the alloy can have a diameter of 150 microns (or 150 microns) or less. In some embodiments, all silicides in the alloy can have a diameter of 100 microns (or 100 microns) or less.

Table III lists a number of experimentally measured microstructural criteria results for alloys.

**Table III: List of Experimentally Measured Microstructural Criteria for Experimental Alloys**

| **Alloy** | **Energy Dispersive Spectroscopy Cu in Matrix (weight%)** | **Bulk Hardness (HV_{0.05})** | **Silicide Hardness (HV_{0.05})** |
|---|---|---|---|
| P92-X14 | 87.6 | 186 | 278 |
| P92-X16 | 90.2 | 207 | 835 |
| P92-X17 | 93.0 | 191 | 1114 |
| P92-X18 | 86.3 | 200 | 1070 |
| P92-X19 | 89.1 | 200 | 1211 |
| P92-X20 | 89.9 | 245 | - |
| P92-X21 | 92.9 | 270 | - |
| P92-X25 | 92.4 | 195 | 642 |
| P92-X26 | 94.5 | 168 | 655 |

### Performance Criteria

In some embodiments, alloys can have a number of desirable performance characteristics. In some embodiments, it may be advantageous for alloys to have one or more of 1) a high resistance to metal to metal wear, 2) minimal to no cracks when welded via a laser cladding process, 3) easily machinable, and/or 4) a high thermal conductivity.

The metal to metal sliding wear resistance can be quantified using the ASTM G77 test. In some embodiments, a hardfacing layer can have an ASTM G77 volume loss of at most 1.4 mm³, at most 1.2 mm³, at most 1.0 mm³, at most 0.8 mm³, at most 0.6 mm³, at most 0.5 mm³ or at most 0.4 mm³ (or at most 1.4 mm³, at most 1.2 mm³, at most 1.0 mm³, at most 0.8 mm³, at most 0.6 mm³, at most 0.5 mm³ or at most 0.4 mm³), or any range between any of these values.

In some embodiments, the hardfacing layer can exhibit 5 cracks per square inch of coating, 4 cracks per square inch of coating, 3 cracks per square inch of coating, 2 cracks per square inch of coating, 1 crack per square inch of coating, 0 cracks per square inch of coating. The square inch can be selected randomly.

An alloy's bulk hardness may be used as an indication of machinability. The lower the bulk the more machinable the alloy will be. In some embodiments, the bulk hardness can be at most 400 HV, at most 350 HV, at most 300 HV, at most 250 HV, at most 200 HV, at most 150 HV or at most 100 HV (or at most 400 HV, at most 350 HV, at most 300 HV, at most 250 HV, at most 200 HV, at most 150 HV or at most 100 HV), or any range between any of these values. In some embodiments, the alloy can have a minimum bulk hardness of 100 HV (or 100 HV).

### Article of Manufacture & Welding Process Concepts

In some embodiments, a novel process for laser cladding aluminum substrates is disclosed. In some embodiments, a cored wire is utilized. Typically, the hardfacing or cladding of aluminum substrates is accomplished using a powder feedstock. Utilization of a wire may be advantageous as wire enables higher productivity in both the cladding process and in feedstock manufacture. In some embodiments, the manufacture of a Cu-based metal cored wire is disclosed. In some embodiments, any one of the compositions described in Table I may be selected to manufacture a metal cored wire.

In some embodiments, the manufactured wire may be used in a welding process. In some embodiments, the wire may be used in a laser welding process. In some embodiments, a short wavelength laser may be used. In some embodiments, a blue wavelength laser is used. In some embodiments, blue wavelength lasers may output light at 400 nm, 425 nm, 450 nm, 475 nm or 500 nm, or at any range between any of these values. In some embodiments, a green wavelength laser is used. In some embodiments, green wavelength lasers may output light at 500 nm, 515 nm, 520 nm, 545 nm or 570 nm, or at any range between any of these values. In some embodiments, the wire welding process may be used in the cladding of automotive applications. In some embodiments, the wire welding process may be used to clad aluminum engine block valves or cylinder heads. In some embodiments, the wire welding process may be used to clad an aluminum substrate.

In some embodiments, a Cu-based powder is used in a short wavelength laser welding process. In some embodiments, a blue laser or green wavelength laser is used. In some embodiments, any one of the compositions described in Table I may be used in the short wavelength laser cladding process.

### EXAMPLES

### Example 1

Example 1 demonstrates how the formation temperature of the silicide phase may be used as an indicator of silicide hardness. Table IV provides a list of a number of experimentally fabricated alloys and their respective measured silicide chemistries, harnesses and calculated formation temperatures. Note that as the calculated silicide formation temperature increases there is a corresponding increase in silicide hardness. This is a direct result of the silicide composition increasing in the silicide forming elements, Cr and Si, which causes the increase in hardness.

**Table IV: List of Experimental Alloys Comparing Silicide Chemistry, Hardness and Formation Temperature**

| **Alloy** | **EDS Cr Content in Silicide (weight%)** | **EDS Si Content in Silicide (weight%)** | **Silicide Hardness (HV_{0.05})** | **Silicide Formation Temp. (K)** |
|---|---|---|---|---|
| P92-X14 | 20.5 | 5.3 | 278 | 1285 |
| P92-X16 | 28.1 | 10.4 | 835 | 1430 |
| P92-X17 | 40.8 | 9.3 | 1114 | 1505 |
| P92-X18 | 49.1 | 6.7 | 1070 | 1455 |
| P92-X19 | 47.6 | 7.8 | 1211 | 1460 |
| P92-X20 | 46.6 | 9.3 | - | 1470 |
| P92-X21 | 70.4 | 14.2 | - | 1540 |

### Example 2

Each copper-based hardfacing alloy was laser clad onto a 0.5 in thick aluminum plate for experimental analysis. The following test were performed on the laser clad overlays: microhardness, density, modulus of elasticity, thermal conductivity, and ASTM G133 reciprocating sliding wear test.

Table V lists the copper alloys that were gas atomized, laser clad and characterized in this investigation. CuLS70 is a comparative alloy utilized by Toyota to clad their engine valves.

**Table V: List of Cu-Based Hardfacing Alloys Laser Clad and Analyzed**

| **Alloy** | **B** | **C** | **Cr** | **Cu** | **Fe** | **Mo** | **Nb** | **Ni** | **Si** | **PSD** |
|---|---|---|---|---|---|---|---|---|---|---|
| CuLS70 | | 0.05-0.15 | | Bal. | 8.55- 9.55 | 6.41- 6.71 | 0.5- 1.5 | 16.8- 17.8 | 2.66-2.96 | -180+45 µm |
| X14 | | 0.1 | 6.5 | 63.4 | 9 | | 1 | 17 | 3 | -150+45 µm |
| X17 | | 0.1 | 7 | 73.9 | 9 | | 1 | 5 | 4 | -150+45 µm |
| X28 | 1 | | | 65 | 16 | | | 14 | 4 | -150+45 µm |
| X29 | | 0.1 | | 65.9 | 14 | | 1 | 13 | 6 | -150+45 µm |

Table VI lists the result for microhardness, modulus of elasticity and density for each overlay. In some applications it is advantageous for the materials to have a low hardness for purposes of quicker machining in application. In some embodiments, the microhardness is 250 HV_{0.3} or below. In other applications, for purposes of a maximizing the wear resistance of the alloy it is useful to maximize the hardness. In such applications, the microhardness is 350 HV_{0.3} or greater. In some embodiments, the elastic modulus of the material can be less than 160 GPa (or 160 GPa). In some embodiments, the elastic modulus of the material can be less than 150 GPa (or 150 GPa). In some embodiments, the density of the alloy can be less than 8 (or less than 8) g/cm³.

**Table VI: Microhardness, Elastic Modulus and Density Results**

| **Overlay** | **Microhardness (HV_{0.3})** | **Elastic Modulus (GPa)** | **Density (g/cm³)** |
|---|---|---|---|
| CuLS70 | 294 | 162 | 8.26 |
| X14 | 263 | 158 | 7.89 |
| X17 | 235 | - | 7.93 |
| X28 | 402 | 155 | 7.74 |
| X29 | 330 | 124 | 7.89 |

Table VII list the thermal conductivity testing results. Thermal conductivity was measured using laser flash analysis at four different temperatures: room temperature, 150, 250, and 350 degrees Celsius. In some applications it is advantageous to have an elevated thermal conductivity. In some embodiments, the thermal conductivity of the deposited alloy is > 20 W/m K (or > 20 W/m K) at 150°C. In some embodiments, the thermal conductivity of the deposited alloy is > 30 W/m K (or > 30 W/m K) at 150°C. In some embodiments, the thermal conductivity of the deposited alloy is > 40 W/m K (or > 40 W/m K) at 150°C.

**Table VII: Thermal Conductivity Results**

| | **Thermal Conductivity (W/m-K)** | | | | |
|---|---|---|---|---|---|
| **Temperature (°C)** | **CuLS70** | **X17** | **X28** | **X14** | **X29** |
| 25 | 21.2 | 29.5 | 16.4 | 33.2 | 16.6 |
| 150 | 14.2 | 36.2 | 15.3 | 36.9 | 31.3 |
| 250 | 10.7 | 39.4 | 14.7 | 42.2 | 31.7 |
| 350 | 8.6 | 46.5 | 18.5 | 48.9 | 36.5 |

Table VIII lists the result for the ASTM G133 reciprocating sliding wear test. This test uses a pin with a hemispherical head that is pressed against the hardfacing overlay with a certain load and reciprocated across the surface of the sample 5,400 times. The volume loss from the pin and from the hardfacing overlay is then measured. For this test two different types of pins where tested. One set of pins was fabricated from austenitic steel and the second from martensitic steel. The pin steels are representative of the type of steel used in engine valves. In addition, the test was performed at an elevated temperature of 120°C. It is advantageous for both the pin and overlay wear volume to be minimized in application.

In some embodiments, the wear volume of a martensitic pin run against the alloy is less than 0.006 mm³ (or less than 0.006 mm³). In some embodiments, the wear volume of a martensitic pin run against the alloy is less than 0.005 mm³ (or less than 0.005 mm³). In some embodiments, the wear volume of the overlay run against a martensitic pin is less than 0.02 mm³ (or less than 0.02 mm³). In some embodiments, the wear volume of the overlay run against a martensitic pin is less than 0.015 mm³ (or less than 0.015 mm³). In some embodiments, the wear volume of an austenitic pin run against the alloy is less than 0.002 mm³ (or less than 0.002 mm³), In some embodiments, the wear volume of an austenitic pin run against the alloy is less than 0.001 mm³ (or less than 0.001 mm³). In some embodiments, the wear volume of the overlay run against an austenitic pin is less than 0.02 mm³ (or less than 0.02 mm³). In some embodiments, the wear volume of the overlay run against an austenitic pin is less than 0.01 mm³ (or less than 0.01 mm³).

**Table VIII: ASTM G133 Reciprocating Sliding Wear Results**

| **Overlay** | **Pin Material** | **Pin Wear Scar Volume Loss (mm³)** | **Overlay Wear Scar Volume Loss (mm³)** |
|---|---|---|---|
| CuLS70 | Austenite | 0.0026 | 0.0401 |
| | Martensite | 0.0081 | 0.0317 |
| X14 | Austenite | 0.0134 | 0.2111 |
| | Martensite | 0.0090 | 0.0251 |
| X17 | Austenite | 0.0008 | 0.0093 |
| | Martensite | 0.0090 | 0.0120 |
| X28 | Austenite | 0.0030 | 0.0271 |
| | Martensite | 0.0045 | 0.0409 |
| X29 | Austenite | 0.0020 | 0.0232 |
| | Martensite | 0.0081 | 0.0249 |

### Applications

The alloys described in this disclosure can be used in a variety of applications and industries. Some non-limiting examples of applications of use include:

Surface Mining applications include the following components and coatings for the following components: Wear resistant sleeves and/or wear resistant hardfacing for slurry pipelines, mud pump components including pump housing or impeller or hardfacing for mud pump components, ore feed chute components including chute blocks or hardfacing of chute blocks, separation screens including but not limited to rotary breaker screens, banana screens, and shaker screens, liners for autogenous grinding mills and semi-autogenous grinding mills, ground engaging tools and hardfacing for ground engaging tools, wear plate for buckets and dump truck liners, heel blocks and hardfacing for heel blocks on mining shovels, grader blades and hardfacing for grader blades, stacker reclaimers, sizer crushers, general wear packages for mining components and other comminution components.

From the foregoing description, it will be appreciated that inventive copper-based hardfacing alloys and methods of use are disclosed.

Moreover, while methods may be depicted in the drawings or described in the specification in a particular order, such methods need not be performed in the particular order shown or in sequential order, and that all methods need not be performed, to achieve desirable results. Other methods that are not depicted or described can be incorporated in the example methods and processes. For example, one or more additional methods can be performed before, after, simultaneously, or between any of the described methods. Further, the methods may be rearranged or reordered in other implementations. Also, the separation of various system components in the implementations described above should not be understood as requiring such separation in all implementations, and it should be understood that the described components and systems can generally be integrated together in a single product or packaged into multiple products.

Conditional language, such as "can," "could," "might," or "may," unless specifically stated otherwise, or otherwise understood within the context as used, is generally intended to convey that certain embodiments include or do not include, certain features, elements, and/or steps. Thus, such conditional language is not generally intended to imply that features, elements, and/or steps are in any way required for one or more embodiments.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

The disclosure herein of any particular feature, aspect, method, property, characteristic, quality, attribute, element, or the like in connection with various embodiments can be used in all other embodiments set forth herein. Additionally, it will be recognized that any methods described herein may be practiced using any device suitable for performing the recited steps.

While a number of embodiments and variations thereof have been described in detail, other modifications and methods of using the same will be apparent to those of skill in the art.

## Claims

1. A welding feedstock consisting of:
Fe: 7.2 to 19.2 wt. %;
Mn or Ni: 4 to 20.4 wt. %;
Si: 2.4 to 7.2 wt. %;
Nb: 0.8 to 1.2 wt. %;
C: 0.08 to 0.12 wt. %,
B: up to 2 wt. %;
and
Cu and incidental impurities: balance;
wherein the welding feedstock comprises a total of 2 wt.% or less of Co, Mo, Ta, V, and W.

2. The welding feedstock of Claim 1, wherein:
Nb: 0.9 to 1.1 wt. %; and
C: 0.09 to 0.11 wt. %.

3. The welding feedstock of Claim 1, wherein:
Fe: 7.2 to 10.8 wt. %;
Mn or Ni: 13.6 to 20.4 wt. %; and
Si: 2.4 to 3.6,
preferably wherein:
Fe: 8.1 to 9.9 wt. %;
Mn or Ni: 15.3 to 18.7 wt. %; and
Si: 2.7 to 3.3 wt. %.

4. The welding feedstock of Claim 1, wherein:
Fe: 7.2 to 10.8 wt. %;
Mn or Ni: 4 to 6 wt. %; and
Si: 3.2 to 4.8 wt. %,
preferably wherein:
Fe: 8.1 to 9.9 wt. %;
Mn or Ni: 4.5 to 5.5 wt. %; and
Si: 3.6 to 4.4 wt. %.

5. The welding feedstock of Claim 1, wherein:
Fe: 12.8 to 19.2 wt. %;
Mn or Ni: 11.2 to 16.8 wt. %;
Si: 3.2 to 4.8 wt. %; and
B: 0.8 to 1.2 wt. %,
preferably wherein:
Fe: 14.4 to 17.6 wt. %;
Mn or Ni: 12.6 to 15.4 wt. %;
Si: 3.6 to 4.4 wt. %; and
B: 0.9 to 1.1 wt. %.

6. The welding feedstock of Claim 1, wherein:
Fe: 11.2 to 16.8 wt. %;
Mn or Ni: 10.8 to 15.6 wt. %; and
Si: 4.8 to 7.2 wt. %,
preferably wherein:
Fe: 12.6 to 15.4 wt. %;
Mn or Ni: 12.6 to 14.3 wt. %; and
Si: 5.4 to 6.6 wt. %.

7. The welding feedstock of any one of Claims 1-6, wherein the welding feedstock is configured to form a Cu-based matrix comprising at least 85 wt. % Cu, preferably at least 90 wt. % Cu, more preferably at least 95 wt. % Cu.

8. The welding feedstock of any one of Claims 1-7, wherein the welding feedstock is a powder or a wire.

9. The welding feedstock of any one of Claims 1-8, wherein the welding feedstock is **characterized by** having a total hard phase fraction of silicides, carbides and borides at 1100K of at least 10 mole%, preferably wherein the welding feedstock is **characterized by** having a total hard phase fraction of silicides, carbides and borides at 1100K of at least 15 mole%, more preferably wherein the welding feedstock is **characterized by** having a total hard phase fraction of silicides, carbides and borides at 1100K of at least 20 mole%.

10. A hardfacing layer formed from the welding feedstock of any one of Claims 1-9.

11. The hardfacing layer of Claim 10, wherein the hardfacing layer comprises a total volume fraction of silicides, carbides and borides of at least 10 volume%, and wherein the hardness of the silicide phase is equal to or less than 1200 HV, preferably wherein the hardfacing layer comprises a total volume fraction of silicides, carbides and borides of at least 15 volume%, and wherein the hardness of the silicide phase is equal to or less than 1000 HV, more preferably wherein the hardfacing layer comprises a total volume fraction of silicides, carbides and borides of at least 20 volume%, and wherein the hardness of the silicide phase is equal to or less than 800 HV.

12. The hardfacing layer of any one of Claims 10-11, wherein the hardfacing layer has an ASTM G77 volume loss of at most 1.0 mm³, preferably wherein the hardfacing layer comprises an ASTM G77 volume loss of at most 0.9 mm³, more preferably wherein the hardfacing layer comprises an ASTM G77 volume loss of at most 0.8 mm³.

13. A method of applying a hardfacing layer, the method comprising laser welding the welding feedstock of any one of Claims 1-9, wherein the welding feedstock is a powder.

## Patentansprüche

1. Schweißzusatzmaterial, bestehend aus:
Fe: 7,2 bis 19,2 Gew.-%;
Mn oder Ni: 4 bis 20,4 Gew.-%;
Si: 2,4 bis 7,2 Gew.-%;
Nb: 0,8 bis 1,2 Gew.-%;
C: 0,08 bis 0,12 Gew.-%,
B: bis zu 2 Gew.- %;
und
Cu und zufällige Unreinheiten: Rest;
wobei das Schweißzusatzmaterial insgesamt 2 Gew.-% oder weniger Co, Mo, Ta, V und W umfasst.

2. Schweißzusatzmaterial nach Anspruch 1, wobei:
Nb: 0,9 bis 1,1 Gew.-% und
C: 0,09 bis 0,11 Gew.-%.

3. Schweißzusatzmaterial nach Anspruch 1, wobei:
Fe: 7,2 bis 10,8 Gew.-%;
Mn oder Ni: 13,6 bis 20,4-Gew. % und
Si: 2,4 bis 3,6,
vorzugsweise wobei:
Fe: 8,1 bis 9,9 Gew.-%;
Mn oder Ni: 15,3 bis 18,7 Gew.-% und
Si: 2,7 bis 3,3 Gew.-%.

4. Schweißzusatzmaterial nach Anspruch 1, wobei:
Fe: 7,2 bis 10,8 Gew.-%;
Mn oder Ni: 4 bis 6 Gew.-% und
Si: 3,2 bis 4,8 Gew.-%,
vorzugsweise wobei:
Fe: 8,1 bis 9,9 Gew.-%;
Mn oder Ni: 4,5 bis 5,5 Gew.-% und
Si: 3,6 bis 4,4 Gew.-%.

5. Schweißzusatzmaterial nach Anspruch 1, wobei:
Fe: 12,8 bis 19,2 Gew.-%;
Mn oder Ni: 11,2 bis 16,8 Gew.-%;
Si: 3,2 bis 4,8 Gew.-% und
B: 0,8 bis 1,2 Gew.-%,
vorzugsweise wobei:
Fe: 14,4 bis 17,6 Gew.-%;
Mn oder Ni: 12,6 bis 15,4 Gew.-%;
Si: 3,6 bis 4,4 Gew.-% und
B: 0,9 bis 1,1 Gew.-%.

6. Schweißzusatzmaterial nach Anspruch 1, wobei:
Fe: 11,2 bis 16,8 Gew.-%;
Mn oder Ni: 10,8 bis 15,6 Gew.-% und
Si: 4,8 bis 7,2 Gew.-%,
vorzugsweise wobei:
Fe: 12,6 bis 15,4 Gew.-%;
Mn oder Ni: 12,6 bis 14,3 Gew.-% und
Si: 5,4 bis 6,6 Gew.-%.

7. Schweißeinsatzmaterial nach einem der Ansprüche 1 bis 6, wobei das Schweißeinsatzmaterial so konfiguriert ist, dass es eine Matrix auf Cu-Basis umfassend mindestens 85 Gew.-% Cu , vorzugsweise mindestens 90 Gew.-% Cu, besonders bevorzugt mindestens 95 Gew.-% Cu bildet.

8. Schweißzusatzmaterial nach einem der Ansprüche 1 bis 7, wobei das Schweißzusatzmaterial ein Pulver oder ein Draht ist.

9. Schweißzusatzmaterial nach einem der Ansprüche 1 bis 8, wobei das Schweißzusatzmaterial **dadurch gekennzeichnet ist, dass** es einen Gesamt-Hartphasenanteil von Siliciden, Carbiden und Boriden bei 1100 K von mindestens 10 Mol-% aufweist, vorzugsweise wobei das Schweißzusatzmaterial **dadurch gekennzeichnet ist, dass** es einen Gesamt-Hartphasenanteil von Siliciden, Carbiden und Boriden bei 1100 K von mindestens 15 Mol-% aufweist, besonders bevorzugt wobei das Schweißeinsatzmaterial **dadurch gekennzeichnet ist, dass** es einen Gesamt-Hartphasenanteil von Siliciden, Carbiden und Boriden bei 1100 K von mindestens 20 Mol-% aufweist.

10. Auftragsschweißschicht, gebildet aus dem Schweißzusatzmaterial nach einem der Ansprüche 1 bis 9.

11. Auftragsschweißschicht nach Anspruch 10, wobei die Auftragsschweißschicht einen Gesamtvolumenanteil an Siliciden, Carbiden und Boriden von mindestens 10 Volumenprozent umfasst, und wobei die Härte der Silicidphase gleich oder kleiner als 1200 HV ist, vorzugsweise wobei die Auftragsschweißschicht einen Gesamtvolumenanteil an Siliciden, Carbiden und Boriden von mindestens 15 Volumenprozent umfasst, und wobei die Härte der Silicidphase gleich oder kleiner als 1000 HV ist, besonders bevorzugt wobei die Auftragsschweißschicht einen Gesamtvolumenanteil an Siliciden, Carbiden und Boriden von mindestens 20 Volumenprozent umfasst und wobei die Härte der Silicidphase gleich oder kleiner als 800 HV ist.

12. Auftragsschweißschicht nach einem der Ansprüche 10 bis 11, wobei die Auftragsschweißschicht einen Volumenverlust nach ASTM G77 von höchstens 1,0 mm³ aufweist, vorzugsweise wobei die Auftragsschweißschicht einen Volumenverlust nach ASTM G77 von höchstens 0,9 mm³ aufweist, besonders bevorzugt wobei die Auftragsschweißschicht einen Volumenverlust nach ASTM G77 von höchstens 0,8 mm³ aufweist.

13. Verfahren zum Aufbringen einer Auftragsschweißschicht, das Verfahren umfassend Laserschweißen des Schweißzusatzmaterials nach einem der Ansprüche 1 bis 9, wobei das Schweißzusatzmaterial ein Pulver ist.

## Revendications

1. Charge de soudage composée de :
Fe : 7,2 à 19,2 % en poids ;
Mn ou Ni : 4 à 20,4 % en poids ;
Si : 2,4 à 7,2 % en poids ;
Nb : 0,8 à 1,2 % en poids ;
C : 0,08 à 0,12 % en poids,
B : jusqu'à 2 % en poids ;
et
Cu et impuretés accidentelles : complément ;
dans laquelle la charge de soudage comprend un total de 2 % en poids ou moins de Co, Mo, Ta, V et W.

2. Charge de soudage selon la revendication 1, dans laquelle :
Nb : 0,9 à 1,1 % en poids ; et
C : 0,09 à 0,11 % en poids.

3. Charge de soudage selon la revendication 1, dans laquelle :
Fe : 7,2 à 10,8 % en poids ;
Mn ou Ni : 13,6 à 20,4 % en poids ; et
Si : 2,4 à 3,6,
de préférence dans laquelle :
Fe : 8,1 à 9,9 % en poids ;
Mn ou Ni : 15,3 à 18,7 % en poids ; et
Si : 2,7 à 3,3 % en poids.

4. Charge de soudage selon la revendication 1, dans laquelle :
Fe : 7,2 à 10,8 % en poids ;
Mn ou Ni : 4 à 6 % en poids ; et
Si : 3,2 à 4,8 % en poids,
de préférence dans laquelle :
Fe : 8,1 à 9,9 % en poids ;
Mn ou Ni : 4,5 à 5,5 % en poids ; et
Si : 3,6 à 4,4 % en poids.

5. Charge de soudage selon la revendication 1, dans laquelle :
Fe : 12,8 à 19,2 % en poids ;
Mn ou Ni : 11,2 à 16,8 % en poids ;
Si : 3,2 à 4,8 % en poids ; et
B : 0,8 à 1,2 % en poids,
de préférence dans laquelle :
Fe : 14,4 à 17,6 % en poids ;
Mn ou Ni : 12,6 à 15,4 % en poids ;
Si : 3,6 à 4,4 % en poids ; et
B : 0,9 à 1,1 % en poids.

6. Charge de soudage selon la revendication 1, dans laquelle :
Fe : 11,2 à 16,8 % en poids ;
Mn ou Ni : 10,8 à 15,6 % en poids ; et
Si : 4,8 à 7,2 % en poids,
de préférence dans laquelle :
Fe : 12,6 à 15,4 % en poids ;
Mn ou Ni : 12,6 à 14,3 % en poids ; et
Si : 5,4 à 6,6 % en poids.

7. Charge de soudage selon l'une quelconque des revendications 1 à 6, dans laquelle la charge de soudage est configurée pour former une matrice à base de Cu comprenant au moins 85 % en poids de Cu, de préférence au moins 90 % en poids de Cu, de manière particulièrement préférée au moins 95 % en poids de Cu.

8. Charge de soudage selon l'une quelconque des revendications 1 à 7, dans laquelle la charge de soudage est une poudre ou un fil.

9. Charge de soudage selon l'une quelconque des revendications 1 à 8, dans laquelle la charge de soudage est **caractérisée en ce qu'**elle a une fraction totale de phase dure de siliciures, de carbures et de borures à 1 100 K d'au moins 10 % en moles, de préférence dans laquelle la charge de soudage est **caractérisée en ce qu'**elle a une fraction totale de phase dure de siliciures, de carbures et de borures à 1 100 K d'au moins 15 % en moles, de manière particulièrement préférée, dans laquelle la charge de soudage est **caractérisée en ce qu'**elle a une fraction totale de phase dure de siliciures, de carbures et de borures à 1 100 K d'au moins 20 % en moles.

10. Couche de rechargement formée à partir de la charge de soudage selon l'une quelconque des revendications 1 à 9.

11. Couche de rechargement selon la revendication 10, dans laquelle la couche de rechargement comprend une fraction volumique totale de siliciures, carbures et borures d'au moins 10 % en volume, et dans laquelle la dureté de la phase de siliciure est égale ou inférieure à 1 200 HV, de préférence dans laquelle la couche de rechargement comprend une fraction volumique totale de siliciures, de carbures et de borures d'au moins 15 % en volume, et dans laquelle la dureté de la phase de siliciure est égale ou inférieure à 1 000 HV, de manière particulièrement préférée dans laquelle la couche de rechargement comprend une fraction volumique totale de siliciures, de carbures et de borures d'au moins 20 % en volume, et dans laquelle la dureté de la phase de siliciure est égale ou inférieure à 800 HV.

12. Couche de rechargement selon l'une quelconque des revendications 10 et 11, dans laquelle la couche de rechargement présente une perte de volume selon ASTM G77 d'au plus 1,0 mm³, de préférence dans laquelle la couche de rechargement comprend une perte de volume selon ASTM G77 d'au plus 0,9 mm³, de manière particulièrement préférée dans laquelle la couche de rechargement comprend une perte de volume selon ASTM G77 d'au plus 0,8 mm³.

13. Procédé d'application d'une couche de rechargement, le procédé comprenant le soudage au laser de la charge de soudage selon l'une quelconque des revendications 1 à 9, dans lequel la charge de soudage est une poudre.
